# EUROPÄISCHE PATENTSCHRIFT

(11) **EP 0 431 028 B1**
(45) Veröffentlichungstag und Bekanntmachung des Hinweises auf die Patenterteilung: **02.02.1994**
(21) Anmeldenummer: 89909754.7
(22) Anmeldetag: 25.08.1989
(51) Int. Cl.: F16D 13/52, F16D 13/58, F16D 25/0638, F16D 25/12, F16D 55/36

(54) **KUPPLUNGS- ODER BREMSLAMELLENPAKET MIT SPREIZVORRICHTUNGEN**
DISK SET WITH SPREADING DEVICE FOR CLUTCHES OR BRAKES
JEU DE DISQUES D'EMBRAYAGE OU DE FREIN COMPORTANT DES DISPOSITIFS D'ECARTEMENT

(30) Priorität: 25.08.1988 DE 3828800
(43) Veröffentlichungstag der Anmeldung: 12.06.1991
(73) Patentinhaber: ZF FRIEDRICHSHAFEN Aktiengesellschaft, 88038 Friedrichshafen (DE)
(72) Erfinder: LEHLE, Hubert, D-7996 Meckenbeuren (DE); SCHNEIDER, Rudolf, D-7996 Meckenbeuren (DE)
(86) Internationale Anmeldenummer: EP8901000
(87) Internationale Veröffentlichungsnummer: WO9002273

(56) Entgegenhaltungen:
- DE-C- 928 135
- US-A- 2 606 638

## Beschreibung

Die Erfindung betrifft ein Kupplungs- oder Bremslamellenpaket mit Spreizvorrichtungen nach dem Oberbegriff des Anspruches 1, welcher ausgeht von einem z. B. in der DE-C-928 135 geschilderten Stand der Technik.

Danach war es bekannt, in Lamellenpaketen von Kupplungen, Bremsen usw. magnetische Felder aufweisende Spreizvorrichtungen vorzusehen, um die Lamellen beim Öffnen der Kupplung bzw. Bremse schnell und zuverlässig voneinander zu lösen. Insbesondere ölgeschmierte Reibflächen neigen dazu, aneinander zu kleben und auch mit an sich unbelastetem Lamellenpaket noch erhebliche Restreibungen bzw. Schleppmomente zu verursachen. Mit Spreizelementen soll im geöffneten Zustand des Lamellenpaketes ein gleichbleibend ausreichender Abstand zwischen denselben wieder hergestellt, das unkontrolliertes Taumeln verhindert und auch ein zum Anfahren günstiger Betriebszustand nach einer Stillsetzung des Fahrzeuges gewährleistet sein. Hierdurch sollen Restmomente, Leistungsverluste, Erwärmung und Verschleiß bei geöffneter Kupplung vermieden werden.

Werden Spreizmagnete gemäß dem Stand der Technik zwischen den Lamellen angeordnet, ist die Reibung von ihrem Werkstoff mitbestimmt und lassen sich viele Reibwerkstoffe nicht einsetzen bzw. ist die Magnetkraft nicht weiter erhöhbar als Platz für Magnete zwischen den Lamellen ist.

Die Aufgabe der Erfindung wird hiervon ausgehend darin gesehen, ein Kupplungs- oder Bremslamellenpaket mit Magnete aufweisenden Spreizvorrichtungen zu schaffen, bei dem die Magnete nicht zwischen den Lamellen zu liegen brauchen und letztere wegen der Magnete nicht baulich verändert werden müssen.

Die Lösung besteht gemäß dem Kennzeichen des Anspruches 1 darin, Magnetkörper mit radial gerichteten Polaritäten im Bereich der Abstützprofile der Lamellen vorzusehen, so daß deren magnetische Felder besonders in Umfangsrichtung wirken. Es wurde nämlich gefunden, daß bei Magnetisierung der einzelnen Reiblamellen über einen Umfangs-Luftspalt hinweg sich an den einzelnen, normalerweise auf Abstand stehenden Lamellenkanten, jeweils einander über die Lamellenabstände gegenübergelegene, gleichgerichtete Polungen einstellen, womit dann im gesamten Lamellenpaket viele einzelne axiale Abstoßungen der einzelnen Lamellen zu ihren Nachbarn hervorgerufen werden. Die wirkenden Abstoßkräfte sind einerseits so gering, daß sie durch die Betätigungskräfte problemlos überwunden werden, andererseits reichen sie aus, um nach Wegfall der das Lamellenpaket aktivierenden Betätigungskraft die einzelnen, eventuell noch aneinander haftenden Lamellen zuverlässig voneinander zu trennen und bis zur erneuten Einschaltung der Betätigungskraft getrennt zu halten. Dabei ist weder eine Beeinträchtigung der Reibwerkstoffpaarung, noch die Inkaufnahme konstruktiver Änderung der Lamellen selbst notwendig.

Dadurch, daß die Magnetkörper im Bereich der Abstützprofile der Lamellen im jeweiligen Lamellenträger Magnetkörper mit quer zur Achsrichtung (also radial oder tangential zu den Lamellen) weisender Polarität wirken, ist eine besonders günstige Magnetkraftwirkung erreichbar.

Weitere Vorteile der Erfindung werden durch die mittels der Unteransprüche angegebenen Merkmale für besondere Ausgestaltungen erreicht:
- Sofern die Lamellen nicht ohnehin bereits aus magnetisierbarem Werkstoff gefertigt sind, genügt es auch, wenn den Magnetkörpern lediglich in den radial gegenüberliegenden Randzonen magnetisierbare Teilbereiche in bzw. an den Lamellen vorgesehen sind.
- Durch Verteilung einiger gleichwirkender Magnetkörper am Umfang des Lamellenpaketes unter axialer mehrheitlicher Überdeckung desselben, wird eine gleichmäßige Spreizkraftverteilung erreicht.
- Durch Einlassung der Magnetkörper in radiale Aussparungen der Lamellenträger sind die Magnetkörper auf einfache Weise und ohne nachteilige Verminderung der mechanisch hochbeanspruchten Lamellenmitnehmer platzsparend in den jeweiligen Lamellenträgern der Kupplung bzw. Bremsen unterbringbar. Auch die Montage der Magnetkörper in den Aussparungen der Lamellenträger ist einfach, und die Lamellenquerschnitte brauchen zwecks Unterbringung der Spreizelemente nicht verringert werden.
- Indem die Magnetkörper das Lamellenpaket an gegeneinander gleichmäßig versetzt angeordneten Stellen des Umfanges axial mehrheitlich überdecken, erfahren sämtliche Lamellen des gesamten Paketes eine etwa gleichstarke Polarisierung gemäß der Erfindung.
- Sofern sich die Lamellenträger, falls sie aus nicht-magnetischem Material (z. B. Aluminium) gefertigt sind, nicht selbst dafür eignen, die magnetischen Feldlinien in Richtung der Lamellenkanten weiterzuführen, können die Magnetkörper auch auf einfache Weise in Polschuhen aus ferromagnetischem Material eingelassen werden, die ihrerseits dann im Lamellenträger zu befestigen sind.
- Eine weitere Intensivierung der Feldlinien ist erreichbar, wenn die Frontseiten der Magnete, welche den gegenübergelegenen Lamellen zugewandt sind, von einem Umfangs-Luftspalt gegenüber dem Umgebungsbereich im jeweiligen Lamellenträger bzw. Polschuh umfaßt sind.
- Die Erzeugung der magnetischen Feldlinien ist sowohl mittels Dauermagneten als auch alternativ mittels Elektromagneten in sinngemäß gleicher Weise möglich.
- Bei der Verwendung von Elektromagneten bietet sich die Möglichkeit an, bei Einleitung der Betätigungskraft das Magnetfeld aufzuheben und erst bei Wegfall der Betätigungskraft wieder einzuschalten. Damit braucht die Betätigungskraft der Spreizkraft nicht entgegenzuwirken und kann kleiner bemessen werden.
- Allen Ausführungen gemeinsam ist der Vorteil, daß in die Zwischenräume zwischen Lamellen und Lamellenträgern keinerlei beengende Einbauten bzw. bewegliche Bauteile eingeengt werden, so daß die Kühlmittelströmungen dort besser zur Wirkung kommen können.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Weitere Einzelheiten der Erfindung sind den Zeichnungserläuterungen zu entnehmen:
- Fig. 1: zeigt einen Querschnitt durch ein Lamellenpaket.
- Fig. 2: zeigt einen Längsschnitt eines gespreizten Lamellenpaketes.
- Fig. 3: zeigt einen Längsschnitt eines geschlossenen Lamellenpaketes.
- Fig. 4 und Fig. 5: zeigen Teilausschnitte für die Anordnung eines als Elektromagnet gestalteten Spreizelementes.

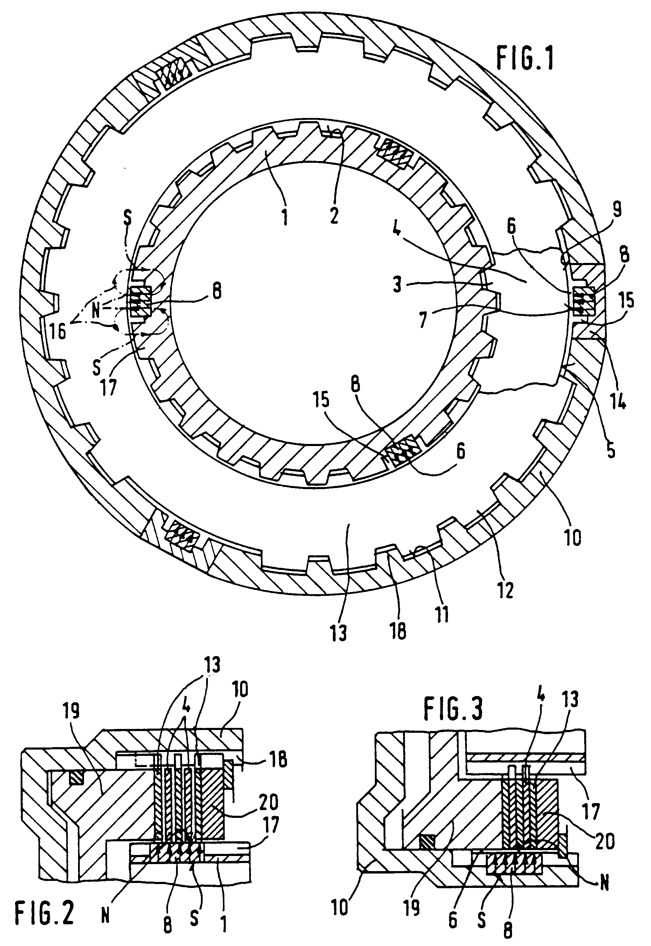

In Fig. 1 ist ein hier als Hohlwelle dargestellter Lamellenträger 1 an seinem Umfang mit hier keilförmigen Aussparungen 2 versehen, in welche zahnförmige Innenmitnehmer 3 einer Innenlamelle 4 eingreifen, deren unverzahnter Außenrand 5 einen radialen Luftspalt 6 gegenüber den zum Zentrum weisenden Frontseiten 7 von Magnetkörpern aufweist, welche die in die Innenmantelfläche 9 eines hier als Gehäuse dargestellten äußeren Lamellenträgers 10 eingelassen sind. Die Magnetkörper 8 sind dabei unter gleichmäßigem Umfang verteilter Anordnung zwischen innenliegenden Aussparungen 11 an der Innenmantelfläche des äußeren Lamellenträgers 10 vorgesehen, in welche Außenmitnehmer 12 der Außenlamellen 13 eingreifen, welche mit den Innenlamellen 4 in abwechselnder axialer Schichtung ein Lamellenpaket bilden. In der Zeichnung sind die im äußeren Lamellenträger 10 unter der Annahme, es handle sich um ein Aluminiumgehäuse, mit Magnetkörpern 8 ausgestattet, welche in einem Polschuh 14 aus ferromagnetischem Material eingebettet sind. Die Aussparungen, in welche die Magnetkörper 8 bzw. auch ihre Polschuhe 14 eingesetzt werden, können zur Minderung von Streuverlusten günstigerweise so ausgeführt werden, daß entlang den in Lamellenträgern 10 bzw. 1 gelegenen Seitenflächen ein Umfangs-Luftspalt 15 rings um den Magnetkörper 8 vorgesehen wird, der etwas größer als der Luftspalt 6 zu den jeweils gegenüberliegenden Umfangsflächen der Lamellen 4 bzw. 13 wird.

In der linken Bildhälfte von Fig. 1 sowie in den Ausschnitten Fig. 2 und 3 ist der Verlauf, der von einem nach außen gerichteten Magnetkörper 8 im Innenlamellenträger 1 ausgelösten Feldlinien 16 dargestellt. Gemäß den Abbildungen entsteht in der Horizontalachse über den Magnetkörpern 8 ein Nordpol N und radial über den benachbarten Vorsprüngen 17 des zugehörigen Lamellenträgers 1 je ein Südpol S. Sinngemäß gleich liegen die Verhältnisse bei einem nach innen weisenden Magnetkörper 8, welcher im Außenlamellenträger 10 eingebaut ist. In Fig. 2 ist zu sehen, daß radial zwischen einem inneren Lamellenträger 1, welcher gegenüber einem äußeren Lamellenträger 10 eine relative Verdrehbarkeit aufweist, ein Lamellenpaket vorgesehen ist, welches aus wechselweise geschichteten Innen- und Außenlamellen 4, 13 besteht. Die Innenlamelle 4 hat innere Mitnehmer 3, welche in Aussparungen des Innenlamellenträgers 1 (z. B. in eine von dessen radialen Vorsprüngen 17 gebildete Wellen-Außenverzahnung) eingreifen, und die Außenlamelle 13 besitzt äußere Mitnehmer 12, welche zwischen Vorsprünge 18 des Außenlamellenträgers 10 eingreifen, in welchem entsprechend große Aussparungen 11 eingearbeitet sind.

Die vom Magnetkörper 8 ausgehende Magnetisierung der Lamellen 4, 13 im Bereich ihrer den Magnetkörpern 8 gegenüberstehenden Ränder hat hier zu einer Ausbildung einzelner gleichgerichteter Gegenpole an jeder Lamellenreibfläche geführt. Die gleichgerichtete Polarisierung schwächt sich auch durch Relativdrehung der Lamellen zueinander nicht ab, weil mehrere Magnetkörper 8 am Umfang verteilt angeordnet sind. Die gleichgerichteten Magnetpole stoßen einander in Axialrichtung ab, so daß die Lamellen 4, 10 axial auseinandergedrückt werden, sobald sie nach dem Zurückfahren des Betätigungskolbens 19 durch diesen nicht mehr belastet sind. Die Lamellen 4, 10 können sich daher sehr leicht selbst wieder voneinander lösen, und es kommt nicht zu einer Schleppreibung während des Betriebes, da jede Lamelle durch einen Minimalabstand von ihrer Nachbarlamelle getrennt ist.

Damit an jeder Lamelle etwa gleichstarke Spreizkräfte auftreten, ist es ratsam, den Magnetkörper 8 etwas länger als das geöffnete Lamellenpaket auszuführen.

In Fig. 3 ist vom gleichen Lamellenpaket im zusammengepreßten Zustand der Bereich um den außenliegenden Magnetkörper 8 gezeigt. Der Druck des Kolbens 19 hat hier die Spreizkräfte durch die Magnetkörper 8 überwunden und drückt die Lamellen 4, 13, ohne daß sie die Magnetkörper 8 mechanisch berühren, dicht zusammen gegen eine Stützscheibe 20, welche z. B. mittels eines Sicherungsringes hier am äußeren Lamellenträger 10 drehfest und axialfest angebracht ist. Da der Magnetkörper 8 ebenfalls gegenüber dem äußeren Lamellenträger 10 axialfest ist, bleiben die Kanten der Lamellen 4, 10 stets in seinem unmittelbaren Wirkbereich und es kann die Spreizkraft sofort nach jedem Wegfall der Kolbenstellkraft wieder wirksam werden bzw. ständig wirksam bleiben. Mittels dieser Spreizvorrichtung können weder Reibungs- oder Klemmverluste entstehen, noch ist die Gefahr, daß die Spreizelemente ihre Lage verändern bzw. zerbrechen, gegeben. Die Magnetkörper 8 können starr und stoßsicher an dem jeweils zugehörigen Lamellenträger 1 bzw. 10 unverlierbar befestigt werden. Die Anwendung ist sowohl bei trocken gehaltenen, als auch bei nassen, d. h., in Öl laufenden Lamellen aller Größen problemlos durchführbar und eine wirksame Hilfe zur Unterbindung sogenannter Schleppmomente, wobei durch Haftreibung der Lamellen aneinander unnötige Energieverluste entstehen.

Eine Variante der Magnetkörper 8 kann auch darin bestehen, daß anstelle von Permanentmagneten Elektromagnetspulen 8A verwendet werden.

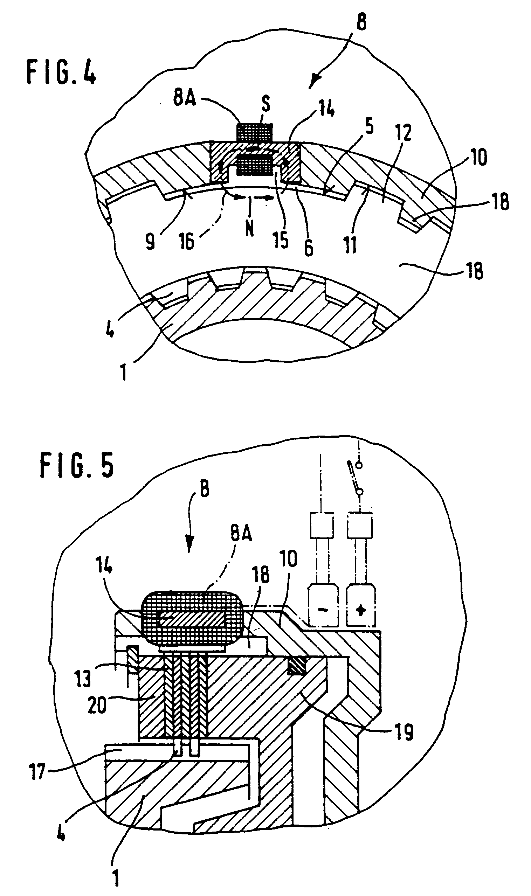

In Fig. 4 ist eine Spule 8A mit einem Polschuh 14 im Außenlamellenträger 10 im Querschnitt dargestellt. Dabei ist der Außenlamellenträger 10 als nicht magnetisierbares Werkstück anzusehen. Die Feldlinien 16 verlaufen daher vom einen Pol über den Luftspalt 6 in die magnetisierbaren Randzonen der Lamellen 4, 13 und im Bereich des gegenüberliegenden Poles S des gleichen Polschuhes 14 erneut über den Luftspalt 6 zurück.

In Fig. 5 ist ein Längsschnitt des Polschuhes 14 und der Magnetspule 8A dargestellt. Die Befestigung des Polschuhes 14 im Außenlamellenträger kann beispielsweise durch Kleben oder nicht gezeigte Halterungen erfolgen. Die axiale Länge der Polschuhe 14 ist ausreichend, um das Lamellenpaket auf ganzer Länge zu überdecken. Der Kern des Polschuhes 14 ist durch die Magnetisierspule 8A in axialer Richtung umfaßt. Dadurch entsteht ein Nordpol N über dem Kolben abgewandten Ende und ein Südpol S über dem kolbenseitigen Ende des Lamellenpaketes 1, 10. Die Stromzufuhr zu den Spulen kann bei Bremsen, deren Außenlamellenträger fest steht, über normale Kabelanschlüsse erfolgen. Bei Kupplungen, deren Außenlamellenträger 10 drehbar ist, werden in der Regel Schleifkontakte vorgesehen.

Die nicht dargestellte Elektroversorgung der Elektromagnetspulen 8A ermöglicht es, einen zusammen mit dem Kolben 19 zu betätigenden Schalter vorzusehen, mit welchem die Elektromagnetspulen 8A während der Aktivierung des Lamellenpaketes 1, 10 abgeschaltet sind, und nur bei Wegfall der Betätigungskraft durch den Kolben 19 eingeschaltet werden. Der Einsatz von Elektromagnetspulen 8A ermöglicht auch die Überwindung hoher Haftreibungskräfte zwischen den Lamellen 4, 13 und bietet die Möglichkeit, durch Abschaltung der Spreizkraft, mit einem kleinen Kolben 19 bzw. geringerer Druckkraft arbeiten zu können.

### Bezugszeichen

- 1: Innenlamellenträger
- 2: Aussparungen an 1
- 3: Innenmitnehmer
- 4: Innenlamelle
- 5: Außenrand von 4
- 6: Radialer Luftspalt
- 7: Frontseite von 8
- 8: Magnetkörper
- 8A: Magnetisierspulen
- 9: Innenmantelfläche
- 10: Außenlamellenträger
- 11: Innenliegende Aussparungen von 10
- 12: Außenmitnehmer von 13
- 13: Außenlamellen
- 14: Polschuhe
- 15: Umfangs-Luftspalt
- 16: Feldlinien
- 17: Vorsprünge von 1
- 18: Vorsprünge Von 10
- 19: Kolben
- 20: Stützscheibe

## Patentansprüche

1. Kupplungs- oder Bremslamellenpaket mit magnetische Felder aufweisenden Spreizvorrichtungen, welche die einander zugewandten Stirnseiten der in zueinander relativ drehbaren Lamellenträgern (1, 10) axial geführten Lamellen (4, 13) nach Wegfall der sie bei Betätigung zusammenpressenden Kräfte wieder auf Abstand bringen, dadurch **gekennzeichnet,** daß Magnetkörper (8) mit radial gerichteten Polen im Bereich von Abstützprofilen (3, 12 bzw. 17, 18) der Lamellen (4, 13) im jeweiligen Lamellenträger (1, 10) vorgesehen sind, die parallel zu den Reibflächen der Lamellen gerichtete Polaritäten (N/S) hervorrufen.

2. Lamellenpaket nach Anspruch 1, dadurch **gekennzeichnet,** daß den Magnetkörpern (8) radial gegenüberliegend magnetisierbare Randzonen der Lamellen (4, 13) zugeordnet sind.

3. Lamellenpaket nach Anspruch 1, dadurch **gekennzeichnet,** daß die Magnetkörper (8) am Umfang des Lamellenpaketes (4, 13) verteilt angeordnet sind und es axial mehrheitlich überdecken.

4. Lamellenpaket nach Anspruch 1, dadurch **gekennzeichnet,** daß die Magnetkörper (8) in radialen Aussparungen der Lamellenträger (1, 10) eingelassen sind.

5. Lamellenpaket nach Anspruch 1, dadurch **gekennzeichnet,** daß der bzw. die Magnetkörper (8) tragenden Lamellenträger (1, 10) aus nicht magnetischem Material gefertigt und die Magnetkörper (8) in Polschuhe (14) aus ferromagnetischem Material eingelassen sind.

6. Lamellenpaket nach Anspruch 1, dadurch **gekennzeichnet,** daß rings um den gegenübergelegenen Lamellen (4, 13) zugewandte Frontseiten (7) der Magnetkörper (8) gegenüber dem Umgebungsbereich im jeweiligen Lamellenträger (1 bzw. 10) oder Polschuhe (14) ein Umfangs-Luftspalt (15) offengehalten ist.

7. Lamellenpaket nach Anspruch 1, dadurch **gekennzeichnet,** daß die magnetischen Feldlinien (16) durch Magnetkörper (8) in Form von Dauermagneten erzeugt werden.

8. Lamellenpaket nach Anspruch 1, dadurch **gekennzeichnet,** daß die magnetischen Feldlinien (16) durch Magnetkörper (8) in Form von Elektromagneten erzeugt werden.

9. Lamellenpaket nach Anspruch 8, dadurch **gekennzeichnet,** daß Elektromagnetspulen (8A) aufweisende Magnetkörper (8) während der Aktivierung des Lamellenpaketes (4, 13) durch Betätigung des Kolbens (19) außer Funktion sind und bei Wegfall von dessen Betätigungskraft eingeschaltet sind.

## Claims

1. Disk set for clutches or brakes with spreading devices having magnetic fields, which bring the mutually facing front faces of the disks (4, 13) axially guided in disk carriers (1, 10) which can rotate with respect to each other, apart again after the forces pressing them together during operation have ceased, characterized in that magnets (8) with radially aligned poles are provided in the area of support profiles (3, 12 and/or 17, 18) of the disks (4, 13) in the appropriate disk carrier (1, 10), which create polarities aligned parallel to the friction surfaces of the disks (N/S).

2. Disk set according to Claim 1, characterized in that magnetizable edge regions of the disks (4, 13) are arranged radially opposite the magnets (8).

3. Disk set according to Claim 1, characterized in that the magnets (8) are arranged distributed on the periphery of the disk set (4, 13) and the majority of them cover it axially.

4. Disk set according to Claim 1, characterized in that the magnets (8) are inserted in radial recesses in the disk carriers (1, 10).

5. Disk set according to Claim 1, characterized in that the disk carrier(s) (1, 10) carrying the magnets (8) is(are) made of non-magnetic material and the magnets (8) are inserted in pole shoes (14) of ferromagnetic material.

6. Disk set according to Claim 1, characterized in that a peripheral air gap (15) is kept open round the front faces (7) of the magnets (8) facing the opposite disks (4, 13) opposite the peripheral area in the appropriate disk carrier (1 or 10) or pole shoes (14).

7. Disk set according to Claim 1, characterized in that the magnetic field lines (16) are created by magnets (8) in the form of permanent magnets.

8. Disk set according to Claim 1, characterized in that the magnetic field lines (16) are created by magnets (8) in the form of electromagnets.

9. Disk set according to Claim 8, characterized in that magnets (8) having electromagnetic coils (8A) are out of operation when the disk set (4, 13) is activated by operating the piston (19) and are brought into operation when its operating force ceases.

## Revendications

1. Jeu de disques d' embrayage ou de frein comportant des dispositifs d' écartement à champs magnétiques qui remettent à distance les unes des autres les faces frontales mutuellement adjacentes des disques (4, 13) guidés axialement sur des porte-disques (1, 10) rotatifs l'un par rapport à l'autre, après suppression des forces comprimant le jeu de disques lors d'un actionnement, caractérisé en ce que des corps magnétiques (8) pourvus de pôles orientés radialement sont prévus à proximité de profils d'appui (3, 12, 17, 18) des disques (4, 13) dans chaque porte-disques (1, 10) et produisent des polarités (N/S) orientées parallèlement aux surfaces de friction des disques.

2. Jeu de disques selon la revendication 1, caractérisé en ce que des zones magnétisables des bords des disques (4,13) sont disposées radialement en face des corps magnétiques (8).

3. Jeu de disques selon la revendication 1, caractérisé en ce que les corps magnétiques (8) sont répartis sur la circonférence du jeu de disques (4, 13) et couvrent axialement la majorité de celui-ci.

4. Jeu de disques selon la revendication 1, caractérisé en ce que les corps magnétiques (8) sont encastrés dans des évidements radiaux des porte-disques (1, 10).

5. Jeu de disques selon la revendication 1, caractérisé en ce que le ou les porte-disques (1, 10) portant des corps magnétiques (8) est ou sont en matière non magnétique et en ce que les corps magnétiques (8) sont encastrés dans des pièces polaires (14) en matière ferromagnétique.

6. Jeu de disques selon la revendication 1, caractérisé en ce qu'un intervalle périphérique annulaire (15) est ménagé autour des faces frontales (7) des corps magnétiques (8) qui font face aux disques (4, 13), par rapport à la zone environnante du porte-disques (1, 10) ou de la pièce polaire (14).

7. Jeu de disques selon la revendication 1, caractérisé en ce que les lignes des champs magnétiques (16) sont produites par des corps magnétiques (8) formés d'aimants permanents.

8. Jeu de disques selon la revendication 1, caractérisé en ce que les lignes des champs magnétiques (16) sont produites par des corps magnétiques (8) formés d' électro-aimants.

9. Jeu de disques selon la revendication 8, caractérisé en ce que les corps magnétiques (8) comportant des bobines d' électro-aimants (8A) sont hors-service pendant que le jeu de disques (4, 13) est actif par actionnement du piston (19) et sont enclenchés en l'absence de la force dudit actionnement.
